# EUROPEAN PATENT APPLICATION

(11) **EP 4 550 706 A1**
(43) Date of publication of application: **07.05.2025**
(21) Application number: 22948320.1
(22) Date of filing: 28.06.2022
(51) Int. Cl.: H04L 1/1867, H04L 1/18, H04L 5/00, H04W 72/04, H04L 1/1829

(54) **METHOD AND APPARATUS FOR DETERMINING HYBRID AUTOMATIC REPEAT REQUEST (HARQ) FEEDBACK**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/102070
(87) International publication number: WO 2024/000200

(57) **Abstract**

Disclosed in embodiments of the present disclosure are a method and apparatus for determining hybrid automatic repeat request (HARQ) feedback, which can be applied to the technical field of communications. The method performed by a terminal device comprises: receiving a scheduling instruction for scheduling data transmission on a plurality of cells; acquiring time domain configuration information from the scheduling instruction; and determining time domain information of HARQ feedback of each cell among the plurality of scheduled cells according to the time domain configuration information. Therefore, the terminal device can determine the time domain information of the HARQ feedback of each cell among the plurality of scheduled cells according to the time domain configuration information comprised in the scheduling instruction sent by a network device, such that the terminal device and the network device can have a consistent understanding of the transmission of HRQA information, thereby ensuring the reliability of information transmission.

## Description

### TECHNICAL FIELD

The present disclosure relates to the field of communication technology, and in particular to a method and apparatus for determining hybrid automatic repeat request (HARQ) feedback.

### BACKGROUND

In order to solve the problem of limited 5G New Radio (NR) resources in the communication system, it is proposed that the data transmission of multiple cells or multiple carriers can be scheduled through a scheduling instruction. Since the scheduling instruction can schedule the data transmission of multiple cells or multiple carriers, how to determine the time domain information of the Hybrid Automatic Repeat reQuest (HARQ) feedback of each scheduled cell or carrier is an urgent problem to be solved.

### SUMMARY

The embodiments of the present disclosure provide a method and device for determining hybrid automatic repeat request (HARQ) feedback, which can be applied in the field of communication technology.

In a first aspect, an embodiment of the present disclosure provides a method for determining hybrid automatic repeat request (HARQ) feedback, the method being executed by a terminal device, and the method including:
receiving a scheduling instruction for scheduling data transmission on multiple cells;
acquiring time domain configuration information from the scheduling instruction; and
determining time domain information of the HARQ feedback of each of the scheduled multiple cells according to the time domain configuration information. In the present disclosure, the terminal device can determine the time domain information of the HARQ feedback of each of the multiple scheduled cells according to the time domain configuration information included in the scheduling instruction sent by the network device, so that the terminal device and the network device can have a consistent understanding of the transmission of the HRQA information, thereby ensuring the reliability of information transmission.

In a second aspect, an embodiment of the present disclosure provides another method for determining hybrid automatic repeat request (HARQ) feedback, the method being executed by a network device, and the method including:
sending a scheduling instruction for scheduling data transmission on multiple cells, wherein the scheduling instruction includes time domain configuration information for determining time domain information of the HARQ feedback of each of the scheduled multiple cells.

In the present disclosure, the network device sends time domain configuration information to the terminal device through a scheduling instruction, so that the terminal device can determine the time domain information of the HARQ feedback of each cell among multiple scheduled cells according to the time domain configuration information, so that the terminal device and the network device can have a consistent understanding of the transmission of HRQA information, thereby ensuring the reliability of information transmission.

In a third aspect, an embodiment of the present disclosure provides a terminal device, including:
a transceiver module, configured to receive a scheduling instruction for scheduling data transmission on multiple cells;
a processing module, configured to obtain time domain configuration information from the scheduling instruction;
wherein the processing module is further configured to determine time domain information of a HARQ feedback of each of the scheduled multiple cells according to the time domain configuration information.

In the present disclosure, the terminal device can determine the time domain information of the HARQ feedback of each of the multiple scheduled cells according to the time domain configuration information included in the scheduling instruction sent by the network device, so that the terminal device and the network device can have a consistent understanding of the transmission of the HRQA information, thereby ensuring the reliability of information transmission.

In a fourth aspect, an embodiment of the present disclosure provides a network device, including:
a transceiver module, configured to send a scheduling instruction for scheduling data transmission on multiple cells, wherein the scheduling instruction includes time domain configuration information for determining time domain information of a HARQ feedback of each of the multiple scheduled cells.

In the present disclosure, the network device sends time domain configuration information to the terminal device through a scheduling instruction, so that the terminal device can determine the time domain information of the HARQ feedback of each cell among multiple scheduled cells according to the time domain configuration information, so that the terminal device and the network device can have a consistent understanding of the transmission of HRQA information, thereby ensuring the reliability of information transmission.

In a fifth aspect, an embodiment of the present disclosure provides a communication device, which includes a processor. When the processor calls a computer program in a memory, the method described in the first aspect is executed.

In a sixth aspect, an embodiment of the present disclosure provides a communication device, which includes a processor. When the processor calls a computer program in a memory, the method described in the second aspect is executed.

In a seventh aspect, an embodiment of the present disclosure provides a communication device, which includes a processor and a memory, in which a computer program is stored; when the computer program is executed by the processor, the communication device executes the method described in the first aspect above.

In an eighth aspect, an embodiment of the present disclosure provides a communication device, which includes a processor and a memory, in which a computer program is stored; when the computer program is executed by the processor, the communication device executes the method described in the second aspect above.

In a ninth aspect, an embodiment of the present disclosure provides a communication device, which includes a processor and an interface circuit, wherein the interface circuit is used to receive code instructions and transmit the code instructions to the processor, and the processor is used to run the code instructions to enable the device to execute the method described in the first aspect above.

In a tenth aspect, an embodiment of the present disclosure provides a communication device, which includes a processor and an interface circuit, wherein the interface circuit is used to receive code instructions and transmit the code instructions to the processor, and the processor is used to run the code instructions to enable the device to execute the method described in the second aspect above.

In the eleventh aspect, an embodiment of the present disclosure provides a communication system, the system including the communication device described in the third aspect and the communication device described in the fourth aspect, or the system including the communication device described in the fifth aspect and the communication device described in the sixth aspect, or the system including the communication device described in the seventh aspect and the communication device described in the eighth aspect, or the system including the communication device described in the ninth aspect and the communication device described in the tenth aspect.

In a twelfth aspect, an embodiment of the present invention provides a computer-readable storage medium for storing instructions used by the above-mentioned terminal device, and when the instructions are executed, the method described in the above-mentioned first aspect is implemented.

In a thirteenth aspect, an embodiment of the present invention provides a computer-readable storage medium for storing instructions used by the above-mentioned network device. When the instructions are executed, the method described in the above-mentioned second aspect is implemented.

In a fourteenth aspect, the present disclosure further provides a computer program product including a computer program, which, when executed on a computer, enables the computer to execute the method described in the first aspect above.

In a fifteenth aspect, the present disclosure further provides a computer program product including a computer program, which, when executed on a computer, enables the computer to execute the method described in the second aspect above.

In a sixteenth aspect, the present disclosure provides a chip system, which includes at least one processor and an interface, for supporting a terminal device to implement the functions involved in the first aspect, for example, determining or processing at least one of the data and information involved in the above method. In a possible design, the chip system also includes a memory, which is used to store computer programs and data necessary for the terminal device. The chip system can be composed of a chip, or it can include a chip and other discrete devices.

In a seventeenth aspect, the present disclosure provides a chip system, which includes at least one processor and an interface, and is used to support a network device to implement the functions involved in the second aspect, for example, determining or processing at least one of the data and information involved in the above method. In a possible design, the chip system also includes a memory, and the memory is used to store computer programs and data necessary for the network device. The chip system can be composed of a chip, or it can include a chip and other discrete devices.

In an eighteenth aspect, the present disclosure provides a computer program, which, when executed on a computer, enables the computer to execute the method described in the first aspect.

In a nineteenth aspect, the present disclosure provides a computer program which, when executed on a computer, enables the computer to execute the method described in the second aspect.

### BRIEF DESCRIPTION OF THE DRAWINGS

In order to more clearly illustrate the technical solutions in the embodiments of the present disclosure or the background technology, the drawings required for use in the embodiments of the present disclosure or the background technology will be described below.
FIG. 1 is a schematic diagram of the architecture of a communication system provided by an embodiment of the present disclosure;
FIG. 2 is a flow chart of a method for determining hybrid automatic repeat request (HARQ) feedback provided by an embodiment of the present disclosure;
FIG. 3 is a flow chart of a method for determining hybrid automatic repeat request (HARQ) feedback provided by another embodiment of the present disclosure;
FIG. 4 is a flow chart of a method for determining hybrid automatic repeat request (HARQ) feedback provided by another embodiment of the present disclosure;
FIG. 5 is a flow chart of a method for determining hybrid automatic repeat request (HARQ) feedback provided by another embodiment of the present disclosure;
FIG. 6 is a schematic diagram of determining a reference PDSCH from PDSCHs of multiple scheduled cells according to an embodiment of the present disclosure;
FIG. 7 is a schematic diagram of determining a reference PDSCH from PDSCHs of multiple scheduled cells according to another embodiment of the present disclosure;
FIG. 8 is a flow chart of a method for determining hybrid automatic repeat request (HARQ) feedback provided by another embodiment of the present disclosure;
FIG. 9 is a flow chart of a method for determining hybrid automatic repeat request (HARQ) feedback provided by another embodiment of the present disclosure;
FIG. 10 is a flow chart of a method for determining hybrid automatic repeat request (HARQ) feedback provided in another embodiment of the present disclosure;
FIG. 11 is a flow chart of a method for determining hybrid automatic repeat request (HARQ) feedback provided by another embodiment of the present disclosure;
FIG. 12 is a schematic diagram of the structure of a communication device according to an embodiment of the present disclosure;
FIG. 13 is a schematic structural diagram of a communication device according to another embodiment of the present disclosure;
FIG. 14 is a schematic diagram of the structure of a chip according to an embodiment of the present disclosure.

### DETAILED DESCRIPTION

The embodiments of the present disclosure are now further described in conjunction with the accompanying drawings and specific implementation methods.

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all implementations consistent with the embodiments of the present disclosure. Instead, they are merely examples of devices and methods consistent with some aspects of the present disclosure as detailed in the appended claims.

The terms used in the disclosed embodiments are only for the purpose of describing specific embodiments and are not intended to limit the disclosed embodiments. The singular forms of "a", "an" and "the" used in the disclosed embodiments and the appended claims are also intended to include plural forms unless the context clearly indicates other meanings. It should also be understood that the term "and/or" used herein refers to and includes any or all possible combinations of one or more associated listed items.

Depending on the context, the words "if" and "in response to" as used herein may be interpreted as "at" or "when" or "in response to determining."

The embodiments of the present disclosure are described in detail below, and examples of the embodiments are shown in the accompanying drawings, wherein the same or similar reference numerals throughout represent the same or similar elements. The embodiments described below with reference to the accompanying drawings are exemplary and are intended to be used to explain the present disclosure, and cannot be understood as limiting the present disclosure.

To facilitate understanding, the terms involved in this application are first introduced.

### 1. Hybrid Automatic Repeat reQuest (HARQ)

HARQ is a technology that combines forward error correction (FEC) and automatic repeat request (ARQ). The key words of HARQ are storage, request retransmission, and combined demodulation. In the case of decoding failure, the receiver saves the received data and asks the sender to retransmit the data. The receiver combines the retransmitted data with the previously received data before decoding.

### 2. Downlink control information (DCI)

DCI is carried by the physical downlink control channel (PDCCH), which may include uplink and downlink resource allocation, hybrid automatic repeat request (HARQ) information, power control and other indication information. PDCCH is a physical channel used to carry downlink control information.

### 3. Physical Downlink Shared Channel (PDSCH)

The PDSCH is a downlink channel that carries user data and transmits the data through each transmission element (e.g., antenna).

### 4. Physical Uplink Control Channel (PUCCH)

PUCCH can carry different types of uplink control information (UCI), such as HARQ feedback, scheduling request, channel state information (CSI) feedback (including possible beam-related information) and their combinations.

In order to better understand the method for determining hybrid automatic repeat request (HARQ) feedback disclosed in the embodiment of the present disclosure, a communication system to which the embodiment of the present disclosure is applicable is first described below.

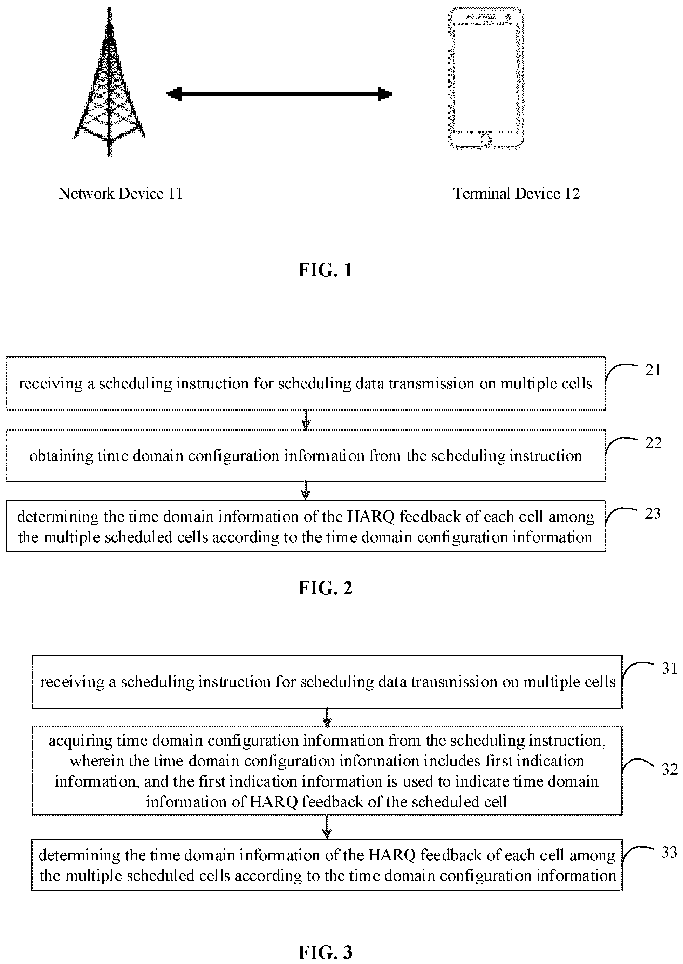

Please refer to FIG. 1, which is a schematic diagram of the architecture of a communication system provided by an embodiment of the present disclosure. The communication system may include, but is not limited to, a network device and a terminal device. The number and form of devices shown in FIG. 1 are only used as examples and do not constitute a limitation on the embodiment of the present disclosure. In actual applications, two or more network devices and two or more terminal devices may be included. The communication system shown in FIG. 1 may include a network device 11 and a terminal device 12.

It should be noted that the technical solutions of the embodiments of the present disclosure can be applied to various communication systems, such as long term evolution (LTE) system, fifth generation (5G) mobile communication system, 5G new radio (NR) system, or other future new mobile communication systems.

The network device 11 in the embodiment of the present disclosure is an entity on the network side for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system. The embodiment of the present disclosure does not limit the specific technology and specific device form adopted by the network device. The network device provided in the embodiment of the present disclosure may include a central unit (CU) and a distributed unit (DU), wherein the CU may also be referred to as a control unit. The CU-DU structure may be used to split the protocol layer of a network device, such as a base station, and the functions of some protocol layers are placed in the CU for centralized control, and the functions of the remaining part or all of the protocol layers are distributed in the DU, and the DU is centrally controlled by the CU.

The terminal device 12 in the embodiment of the present disclosure is an entity on the user side for receiving or transmitting signals, such as a mobile phone. The terminal device may also be referred to as a terminal device (terminal), user equipment (UE), mobile station (MS), mobile terminal (MT), etc. The terminal device may be a car with communication function, a smart car, a mobile phone, a wearable device, a tablet computer (Pad), a computer with wireless transceiver function, a virtual reality (VR) terminal device, an augmented reality (AR) terminal device, a wireless terminal device in industrial control (industrial control), a wireless terminal device in self-driving, a wireless terminal device in remote medical surgery, a wireless terminal device in smart grid (smart grid), a wireless terminal device in transportation safety (transportation safety), a wireless terminal device in smart city (smart city), a wireless terminal device in smart home (smart home), etc. The embodiment of the present disclosure does not limit the specific technology and specific device form adopted by the terminal device.

It can be understood that the communication system described in the embodiment of the present disclosure is for the purpose of more clearly illustrating the technical solution of the embodiment of the present disclosure, and does not constitute a limitation on the technical solution provided by the embodiment of the present disclosure. A person skilled in the art can know that with the evolution of the system architecture and the emergence of new business scenarios, the technical solution provided by the embodiment of the present disclosure is also applicable to similar technical problems.

In view of the situation where data transmission of multiple cells or multiple carriers is scheduled by one scheduling instruction, the present disclosure proposes a method that can accurately determine the time domain information of the HARQ feedback corresponding to each of the multiple scheduled cells, so that the terminal device first obtains the time domain configuration information from the scheduling instruction sent by the network device for scheduling data transmission on multiple cells, and then determines the time domain information of the HARQ feedback of each of the multiple scheduled cells according to the time domain configuration information, so that the terminal device and the network device maintain a consistent understanding of the transmission of HRQA information, thereby ensuring the reliability of data transmission.

It should be noted that the method for determining the location information of the control resources provided in any embodiment of the present application can be executed alone, or in combination with possible implementation methods in other embodiments, or in combination with any technical solution in the related technology.

The method and device for determining hybrid automatic repeat request (HARQ) feedback provided by the present disclosure are described in detail below in conjunction with the accompanying drawings.

Please refer to FIG. 2, which is a flow chart of a method for determining hybrid automatic repeat request (HARQ) feedback provided by an embodiment of the present disclosure, and the method is executed by a terminal device. As shown in FIG. 2, the method may include but is not limited to the following steps:
Step 21, receiving a scheduling instruction for scheduling data transmission on multiple cells.

In the present disclosure, the multiple cells scheduled by the scheduling instruction may be multiple cells in a cell group, or multiple cells in multiple cell groups, or multiple carriers, etc., which is not limited in the present disclosure.

Typically, a terminal device can obtain scheduling instructions and the like by receiving physical layer information from a network device, which is not limited in the present disclosure.

Optionally, the scheduling instruction may be downlink control information (DCI), so that when the terminal device receives the DCI, it may determine that the scheduling instruction has been received, etc., which is not limited in the present disclosure.

Step 22, obtaining time domain configuration information from the scheduling instruction.

In the present disclosure, the scheduling instruction may further include time domain configuration information for determining time domain information of HARQ feedback of each scheduled cell while scheduling data transmission on the multiple cells.

The time domain configuration information may include the time domain information of the HARQ feedback corresponding to each scheduled cell, or may include the time domain information of the HARQ feedback corresponding to a reference cell in multiple scheduled cells, etc., which is not limited in the present disclosure.

Optionally, when the scheduling instruction is DCI, the time domain configuration information may be a physical downlink shared channel (PDSCH)-to-HARQ timing indicator (PDSCH-to-HARQ_timing indicator) information field in the DCI. That is, the time domain configuration information is stored in the PDSCH-to-HARQ timing indicator information field in the DCI, and the terminal device may parse the data in the PDSCH-to-HARQ timing indicator information field after receiving the DCI to obtain the time domain configuration information.

Step 23, determining the time domain information of the HARQ feedback of each cell among the multiple scheduled cells according to the time domain configuration information.

The time domain information of the HARQ feedback of the cell may be the time when the target user sends the HARQ feedback to the network device.

It can be understood that after receiving the time domain configuration information contained in the scheduling instruction, the terminal device can determine the time domain information of the HARQ feedback of each cell among the multiple scheduled cells according to the time domain configuration information, thereby realizing the configuration of the time domain information of the HARQ feedback of multiple scheduled cells through one scheduling instruction, which saves the resources.

By implementing the embodiment of the present disclosure, the terminal device first receives a scheduling instruction for scheduling data transmission on multiple cells, then obtains time domain configuration information from the scheduling instruction, and determines the time domain information of HARQ feedback of each of the multiple scheduled cells according to the time domain configuration information. Thus, the terminal device can determine the time domain information of HARQ feedback of each of the multiple scheduled cells according to the time domain configuration information contained in the scheduling instruction sent by the network device, so that the terminal device and the network device can have a consistent understanding of the transmission of HRQA information, thereby ensuring the reliability of information transmission.

Please refer to FIG. 3, which is a flow chart of a method for determining hybrid automatic repeat request (HARQ) feedback provided by an embodiment of the present disclosure, and the method is executed by a terminal device. As shown in FIG. 3, the method may include but is not limited to the following steps:
Step 31, receiving a scheduling instruction for scheduling data transmission on multiple cells.

The specific implementation form of step 31 may refer to the detailed description of any embodiment of the present disclosure, and will not be repeated here.

Step 32, acquiring time domain configuration information from the scheduling instruction, wherein the time domain configuration information includes first indication information, and the first indication information is used to indicate time domain information of HARQ feedback of the scheduled cell.

Optionally, the time domain configuration information may include a first indication information, where the indication information is used to indicate the time domain information of the HARQ feedback of each cell among multiple scheduled cells. Alternatively, the time domain configuration information may include multiple pieces of first indication information, where one piece of the first indication information is used to indicate the time domain information of the HARQ feedback of one scheduled cell. This disclosure is not limited to this.

The first indication information may include an identifier of a cell and time domain information of HARQ feedback corresponding to the cell.

For example, the multiple cells scheduled by the same scheduling instruction are cell 1, cell 2, and cell 3, and the time domain configuration information includes three pieces of first indication information, wherein the first indication information 1 may include an identifier corresponding to cell 1 and time domain information of HARQ feedback corresponding to cell 1; the first indication information 2 may include an identifier corresponding to cell 2 and time domain information of HARQ feedback corresponding to cell 2; and the first indication information 3 may include an identifier corresponding to cell 3 and time domain information of HARQ feedback corresponding to cell 3. This disclosure is not limited to this.

Alternatively, in another implementation method, the first indication information may only include the time domain information of the HARQ feedback corresponding to the target cell. For example, the multiple cells scheduled by the same scheduling instruction are cell 1, cell 2, and cell 3, then the time domain configuration information includes 3 pieces of first indication information, wherein the first indication information 1 may include the time domain information of the HARQ feedback corresponding to cell 1; the first indication information 2 may include the time domain information of the HARQ feedback corresponding to cell 2; and the first indication information 3 may include the time domain information of the HARQ feedback corresponding to cell 3. The terminal determines, through a predefined rule, which cell the first indication information corresponds to for the time domain information of the HARQ feedback. For example, the first indication information 1, the first indication information 2, and the first indication information 3 are arranged sequentially in the DCI, and the terminal determines, based on the cell ID information of the scheduled cell1, cell2, and cell3, which cell the first indication information corresponds to for the time domain information of the HARQ feedback. This disclosure is not limited to this.

Step 33, determining the time domain information of the HARQ feedback of each cell among the multiple scheduled cells according to the time domain configuration information.

In the embodiment of the present disclosure, since the time domain configuration information includes the first indication information, and the first indication information is used to indicate the time domain information of the HARQ feedback of the scheduled cell, the time domain information of the HARQ feedback of each cell among the multiple scheduled cells can be accurately obtained from the time domain configuration information.

By implementing the embodiment of the present disclosure, the terminal device first receives a scheduling instruction for scheduling data transmission on multiple cells, and then obtains time domain configuration information including first indication information from the scheduling instruction, wherein the first indication information is used to indicate the time domain information of the HARQ feedback of the scheduled cell, and finally determines the time domain information of the HARQ feedback of each cell among the scheduled cells according to the time domain configuration information. Thus, the terminal device can determine the time domain information of the HARQ feedback of each cell among the scheduled cells through one scheduling instruction, so that the terminal device and the network device have a consistent understanding of the transmission of HRQA information, thereby ensuring the reliability of data transmission.

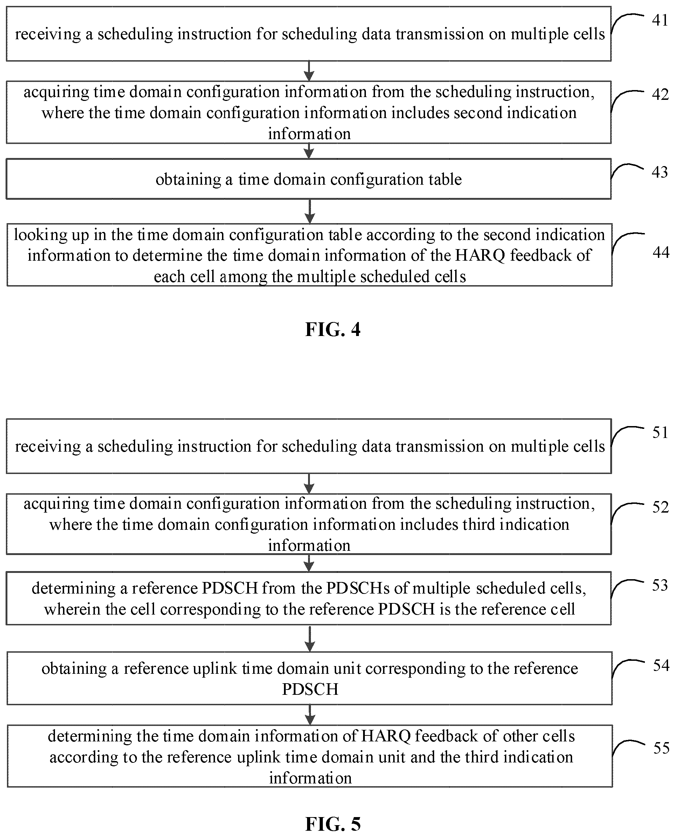

Please refer to FIG. 4, which is a flow chart of a method for determining hybrid automatic repeat request (HARQ) feedback provided by an embodiment of the present disclosure, and the method is executed by a terminal device. As shown in FIG. 4, the method may include but is not limited to the following steps:

Step 41, receiving a scheduling instruction for scheduling data transmission on multiple cells.

Step 42, acquiring time domain configuration information from the scheduling instruction, where the time domain configuration information includes second indication information.

In the embodiment, the second indication information can be used to indicate a unified identification or number of multiple scheduled cells. The second indication information can be the value of the PDSCH-to-HARQ_timing indicator information field in the DCI. Optionally, the second indication information can occupy 2 bits or 3 bits in the PDSCH-to-HARQ_timing indicator information field in the DCI. This is not limited in the present disclosure. If the second indication information occupies 3 bits, it can be 000, 001, 111, etc., and this is not limited in the present disclosure.

### Step 43, obtaining a time domain configuration table.

Optionally, the time domain configuration table may include information field values in the DCI, and timing configuration information of HARQ feedback of one or more cells corresponding to each information field value.

Optionally, the terminal device may obtain the time domain configuration table through high-level signaling or physical layer signaling of the network device. Then, the timing configuration information of the HARQ feedback of the cell indicated by the second indication information may be determined through the corresponding relationship, the information domain value in the scheduling instruction, and the timing configuration information of the HARQ feedback.

For example, the time domain configuration table may be as shown in Table 1 below:

**Table 1**

| Information field value in DCI | HARQ feedback timing configuration information |
|---|---|
| 000 | K1_{cell1}, K1_{cell2}, K1_{cell3}, K1_{cell4}, |
| 001 | K1_{cell1}, K1_{cell3} |
| ... | ... |
| 111 | K1_{cell1} |

In the embodiment, K1_{cell1} may be the timing configuration information of the HARQ feedback corresponding to cell 1, K1_{cell2} may be the timing configuration information of the HARQ feedback corresponding to cell 2, K1_{cell3} may be the timing configuration information of the HARQ feedback corresponding to cell 3, and K1_{cell4} may be the timing configuration information of the HARQ feedback corresponding to cell 4, which is not limited in the present disclosure.

It is understandable that each element and each corresponding relationship in Table 1 exist independently; these elements and corresponding relationships are exemplarily listed in the same table, but it does not mean that all elements and corresponding relationships in the table must exist at the same time as shown in Table 1. The value of each element and each corresponding relationship is independent of any other element value or corresponding relationship in Table 1. Therefore, those skilled in the art can understand that the value of each element and each corresponding relationship in Table 1 are all independent embodiments.

Step 44, looking up in the time domain configuration table according to the second indication information to determine the time domain information of the HARQ feedback of each cell among the multiple scheduled cells.

It can be understood that after obtaining the second indication information and the time domain configuration table, the timing configuration information of the HARQ feedback of each cell in the scheduled cells can be obtained from the time domain configuration table according to the second indication information, and then the time domain information of the HARQ feedback of each cell can be determined.

By implementing the embodiment of the present disclosure, the terminal device first receives a scheduling instruction for scheduling data transmission on multiple cells, then obtains the time domain configuration information containing the second indication information from the scheduling instruction, then obtains the time domain configuration table, and finally looks up in the time domain configuration table according to the second indication information to determine the time domain information of the HARQ feedback of each of the multiple scheduled cells. Thus, the terminal device can determine the time domain information of the HARQ feedback of each of the multiple scheduled cells according to the time domain configuration information contained in the scheduling instruction, so that the terminal device and the network device have a consistent understanding of the transmission of the HRQA information, thereby ensuring the reliability of data transmission.

Please refer to FIG. 5, which is a flow chart of a method for determining hybrid automatic repeat request (HARQ) feedback provided by an embodiment of the present disclosure, and the method is executed by a terminal device. As shown in FIG. 5, the method may include but is not limited to the following steps:
Step 51, receiving a scheduling instruction for scheduling data transmission on multiple cells.
Step 52, acquiring time domain configuration information from the scheduling instruction, where the time domain configuration information includes third indication information.

The third indication information is used to indicate the time offset between the time domain information of the HARQ feedback corresponding to other cells except a reference cell among the multiple scheduled cells and the time domain information of a reference uplink time domain unit.

Optionally, the time domain configuration information may be a PDSCH-to-HARQ_timing indicator information field in the DCI. That is, the third indication information is indicated by the network device through the PDSCH-to-HARQ_timing indicator information field in the DCI.

Step 53, determining a reference PDSCH from the PDSCHs of multiple scheduled cells, wherein the cell corresponding to the reference PDSCH is the reference cell.

Optionally, the reference PDSCH may be the last PDSCH whose transmission is completed in the time domain. Alternatively, the reference PDSCH may also be agreed upon by a protocol. The reference PDSCH may also be a PDSCH transmission on a reference cell, and the reference cell may be pre-configured. Alternatively, the reference PDSCH may also be indicated by a scheduling instruction. This disclosure is not limited to this.

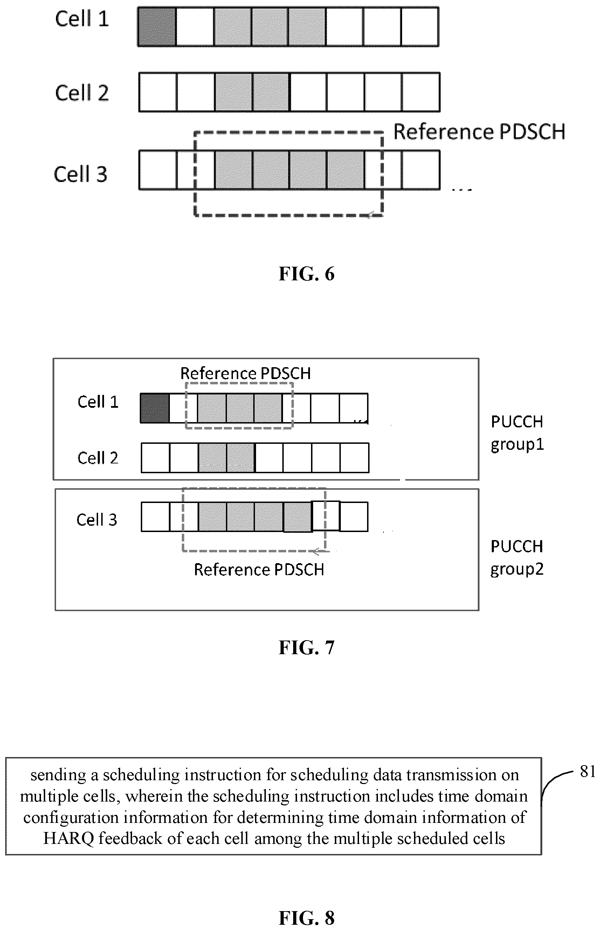

FIG. 6 is a schematic diagram of determining the reference PDSCH from the PDSCHs of multiple scheduled cells provided by an embodiment of the present disclosure. As shown in FIG. 6, the cells scheduled by the scheduling instruction are cell 1 (cell1), cell 2 (cell2), and cell 3 (cell3), wherein the PDSCH of cell 3 (cell3) is the last PDSCH the last PDSCH whose transmission is completed in the time domain. Therefore, the PDSCH of cell 3 (cell3) is determined as the reference PDSCH.

Optionally, if FIG. 7 is another schematic diagram of determining the reference PDSCH from the PDSCHs of multiple scheduled cells provided by an embodiment of the present disclosure. As shown in FIG. 7, the cells scheduled by the scheduling instruction are cell 1 (cell1), cell 2 (cell2), and cell 3 (cell3), wherein cell 1 (cell1) and cell 2 (cell2) belong to the same PUCCH cell group, namely PUCCH group1, and cell 3 (cell3) belongs to PUCCH group2. The PDSCH of cell 1 (cell1) is the last PDSCH whose transmission is completed in PUCCH group1, therefore, the PDSCH of cell 1 (cell1) is determined to be the reference PDSCH in PUCCH group1. The PDSCH of cell 3 (cell3) is the reference PDSCH in PUCCH group2.

Step 54, obtaining a reference uplink time domain unit corresponding to the reference PDSCH.

Optionally, the reference uplink time domain unit may be the last uplink time domain unit corresponding to the downlink time domain unit where the reference PDSCH is located.

Step 55, determining the time domain information of HARQ feedback of other cells according to the reference uplink time domain unit and the third indication information.

Optionally, other cells and the cell corresponding to the reference PDSCH belong to the same physical uplink control channel (PUCCH) cell group.

For example, if the multiple cells scheduled by the scheduling instruction are cell 1, cell 2, cell 3, and cell 4, where cell 1 and cell 2 belong to PUCCH cell group 1, cell 3 and cell 4 belong to PUCCH cell group 2, cell 1 is the reference cell of PUCCH cell group 1, and cell 3 is the reference cell of PUCCH cell group 2, then the time domain information of the HARQ feedback of cell 2 can be determined according to the time offset between the time domain information of the HARQ feedback corresponding to cell 2 and the time domain information of the reference uplink time domain unit corresponding to the reference PDSCH of reference cell 1. The time domain information of the HARQ feedback of cell 4 is determined according to the time offset between the time domain information of the HARQ feedback corresponding to cell 4 and the time domain information of the reference uplink time domain unit corresponding to the reference PDSCH of reference cell 3.

In the embodiment of the present disclosure, after the reference uplink time domain unit and the third indication information are determined, the time domain information of the HARQ feedback of other cells among the multiple scheduled cells can be determined.

For example, the reference cell corresponding to the reference PDSCH is cell 1, and the reference uplink time domain unit corresponding to the reference PDSCH is the fifth slot. The time domain information of the HARQ feedback corresponding to cell 2 indicated by the third indication information is 1 slot relative to the time domain information of the reference uplink time domain unit of the reference PDSCH, and the time domain information of the HARQ feedback of cell 2 can be the sixth slot. This disclosure is not limited to this.

By implementing the embodiments of the present disclosure, the terminal device first receives a scheduling instruction for scheduling data transmission on multiple cells, then obtains the time domain configuration information including the third indication information from the scheduling instruction, and then determines the reference PDSCH from the PDSCHs of the multiple scheduled cells, and obtains the reference uplink time domain unit corresponding to the reference PDSCH, and finally determines the time domain information of the HARQ feedback of other cells among the multiple scheduled cells according to the reference uplink time domain unit and the third indication information. Thus, the terminal device can determine the time domain information of the HARQ feedback of each of the multiple scheduled cells according to the time domain configuration information contained in the scheduling instruction, so that the terminal device and the network device have a consistent understanding of the transmission of HRQA information, thereby ensuring the reliability of data transmission.

Please refer to FIG. 8, which is a flow chart of a method for determining hybrid automatic repeat request (HARQ) feedback provided by an embodiment of the present disclosure, and the method is executed by a network device. As shown in FIG. 8, the method may include but is not limited to the following steps:
Step 81, sending a scheduling instruction for scheduling data transmission on multiple cells, wherein the scheduling instruction includes time domain configuration information for determining time domain information of HARQ feedback of each cell among the multiple scheduled cells.

In the present disclosure, the multiple cells scheduled by the scheduling instruction may be multiple cells in a cell group, or multiple cells in multiple cell groups, or multiple carriers, etc., and this disclosure is not limited to this.

Generally, the network device can send scheduling instructions, etc. to the terminal device through physical layer information, and this disclosure is not limited to this.

Optionally, the scheduling instruction may be downlink control information (DCI).

In the present disclosure, while scheduling data transmission on multiple cells, the scheduling instruction may further include time domain configuration information for determining time domain information of HARQ feedback of each scheduled cell.

The time domain configuration information may include the time domain information of the HARQ feedback corresponding to each scheduled cell, or may include the time domain information of the HARQ feedback corresponding to the reference cell in multiple scheduled cells, etc., which is not limited in the present disclosure.

Optionally, when the scheduling instruction is DCI, the time domain configuration information may be a physical downlink shared channel (PDSCH)-to-HARQ timing indicator information field in the DCI, that is, the time domain configuration information is stored in the PDSCH-to-HARQ_timing indicator information field in the DCI.

The time domain information of the HARQ feedback of the cell may be the time when the target user sends the HARQ feedback to the network device.

By implementing the embodiments of the present disclosure, the network device sends a scheduling instruction for scheduling data transmission on multiple cells to the terminal device, wherein the scheduling instruction includes time domain configuration information for determining the time domain information of the HARQ feedback of each cell among the multiple scheduled cells. As a result, the terminal device can determine the time domain information of the HARQ feedback of each cell among the multiple scheduled cells according to the time domain configuration information, so that the terminal device and the network device can have a consistent understanding of the transmission of HRQA information, thereby ensuring the reliability of information transmission.

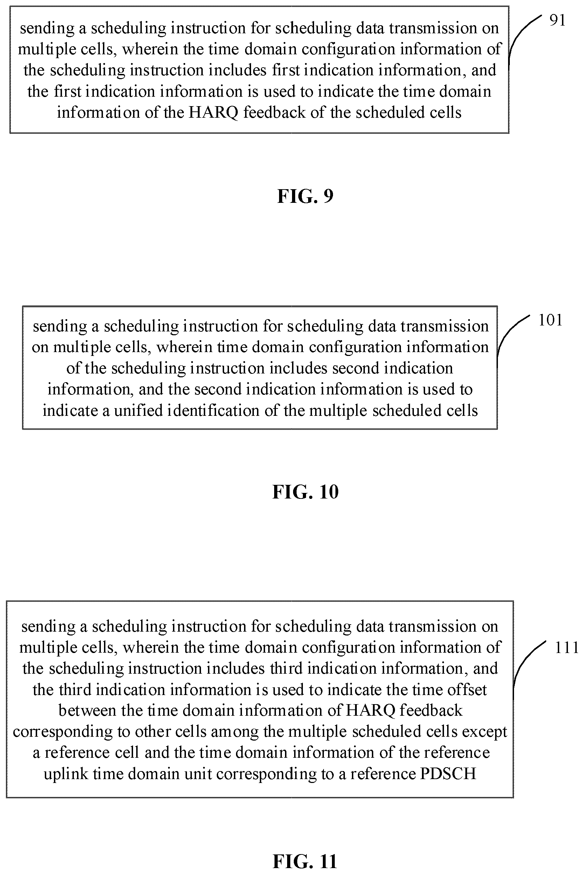

Please refer to FIG. 9, which is a flow chart of a method for determining hybrid automatic repeat request (HARQ) feedback provided by an embodiment of the present disclosure, and the method is executed by a network device. As shown in FIG. 9, the method may include but is not limited to the following steps:
Step 91, sending a scheduling instruction for scheduling data transmission on multiple cells, wherein the time domain configuration information of the scheduling instruction includes first indication information, and the first indication information is used to indicate the time domain information of the HARQ feedback of the scheduled cells.

Optionally, the time domain configuration information may include one piece of first indication information, where the one piece of indication information is used to indicate the time domain information of the HARQ feedback of each cell among multiple scheduled cells. Alternatively, the time domain configuration information may include multiple pieces of first indication information, where one piece of the first indication information is used to indicate the time domain information of the HARQ feedback of one scheduled cell. This disclosure is not limited to this.

The first indication information may include an identifier of a cell and time domain information of HARQ feedback corresponding to the cell.

For example, the multiple cells scheduled by the same scheduling instruction are cell 1, cell 2, and cell 3, then the time domain configuration information includes three pieces of first indication information, wherein the first indication information 1 may include an identifier corresponding to cell 1 and time domain information of HARQ feedback corresponding to cell 1; the first indication information 2 may include an identifier corresponding to cell 2 and time domain information of HARQ feedback corresponding to cell 2; and the first indication information 3 may include an identifier corresponding to cell 3 and time domain information of HARQ feedback corresponding to cell 3. This disclosure is not limited to this.

Alternatively, in another implementation method, the first indication information may only include the time domain information of the HARQ feedback corresponding to the target cell. For example, the multiple cells scheduled by the same scheduling instruction are cell 1, cell 2, and cell 3, then the time domain configuration information includes 3 pieces of first indication information, wherein the first indication information 1 may include the time domain information of the HARQ feedback corresponding to cell 1; the first indication information 2 may include the time domain information of the HARQ feedback corresponding to cell 2; and the first indication information 3 may include the time domain information of the HARQ feedback corresponding to cell 3. The terminal determines, through a predefined rule, which cell the first indication information corresponds to for the time domain information of the HARQ feedback. For example, the first indication information 1, the first indication information 2, and the first indication information 3 are arranged sequentially in the DCI, and the terminal may determine, based on the cell ID information of the scheduled cell1, cell2, and cell3, which cell the first indication information corresponds to for the time domain information of the HARQ feedback. This disclosure is not limited to this.

By implementing the embodiment of the present disclosure, the network device sends a scheduling instruction for scheduling data transmission on multiple cells to the terminal device, wherein the time domain configuration information of the scheduling instruction includes multiple pieces of first indication information, and the first indication information is used to indicate the time domain information of the HARQ feedback of the scheduled cell. As a result, the terminal device can determine the time domain information of the HARQ feedback of each of the multiple scheduled cells through one scheduling instruction, so that the terminal device and the network device have a consistent understanding of the transmission of HRQA information, thereby ensuring the reliability of data transmission.

Please refer to FIG. 10, which is a flow chart of a method for determining hybrid automatic repeat request (HARQ) feedback provided by an embodiment of the present disclosure, and the method is executed by a network device. As shown in FIG. 10, the method may include but is not limited to the following steps:
Step 101, sending a scheduling instruction for scheduling data transmission on multiple cells, wherein time domain configuration information of the scheduling instruction includes second indication information, and the second indication information is used to indicate a unified identification of the scheduled multiple cells.

In the embodiment, the second indication information can be used to indicate the unified identification or number of multiple cells scheduled. The second indication information can be the value of the PDSCH-to-HARQ_timing indicator information field in the DCI. Optionally, the second indication information can occupy 2 bits or 3 bits in the PDSCH-to-HARQ_timing indicator information field in the DCI. This disclosure is not limited to this. If the second indication information occupies 3 bits, it can be 000, 001, 111, etc., and this disclosure is not limited to this.

In an embodiment of the present disclosure, the network device can send the time domain configuration table to the terminal device through high-layer signaling or physical layer signaling, so that after the network device sends the second indication information to the terminal device, the terminal device can look up in the time domain configuration table according to the second indication information to determine the time domain information of the HARQ feedback of each cell among multiple scheduled cells.

In the embodiment of the present disclosure, after the network device sends a scheduling instruction including the second indication information to the terminal device, the terminal device can obtain the timing configuration information of the HARQ feedback of each cell in the scheduled cells indicated by the second indication information from the time domain configuration table, and then determine the time domain information of the HARQ feedback of each cell. As a result, the terminal device can determine the time domain information of the HARQ feedback of each cell in the scheduled multiple cells through one scheduling instruction, so that the terminal device and the network device have a consistent understanding of the transmission of the HRQA information, thereby ensuring the reliability of data transmission.

Please refer to FIG. 11, which is a flow chart of a method for determining hybrid automatic repeat request (HARQ) feedback provided by an embodiment of the present disclosure, and the method is executed by a network device. As shown in FIG. 11, the method may include but is not limited to the following steps:

Step 111, sending a scheduling instruction for scheduling data transmission on multiple cells, wherein the time domain configuration information of the scheduling instruction includes third indication information, and the third indication information is used to indicate the time offset between the time domain information of HARQ feedback corresponding to other cells among the multiple scheduled cells except a reference cell and the time domain information of the reference uplink time domain unit corresponding to a reference PDSCH, wherein the reference PDSCH can be the PDSCH corresponding to the reference cell.

Optionally, the reference PDSCH may be the last PDSCH whose transmission is completed in the time domain. Alternatively, the reference PDSCH may also be agreed upon by a protocol. The reference PDSCH may also be a PDSCH transmission on a reference cell, and the reference cell may be pre-configured, which is not limited in the present disclosure.

In the disclosed embodiment, after the network device sends a scheduling instruction including the third indication information to the terminal device, the terminal device may first determine the reference PDSCH and the reference uplink time domain unit corresponding to the reference PDSCH, and then determine the time domain information of the HARQ feedback of other cells according to the reference uplink time domain unit and the third indication information. Thus, the time domain information of the HARQ feedback of each cell among the multiple scheduled cells can be determined.

In an embodiment of the present disclosure, a network device sends a scheduling instruction for scheduling data transmission on multiple cells to a terminal device, wherein the time domain configuration information of the scheduling instruction includes a third indication information, and the third indication information is used to indicate that the reference PDSCH is the PDSCH corresponding to the reference cell, and the terminal device determines the time domain information of the HARQ feedback corresponding to the other cells according to the reference uplink time domain unit and the third indication information. Thus, after the network device sends the scheduling instruction to the terminal device, the terminal device can determine the time domain information of the HARQ feedback of each of the multiple cells scheduled through the time domain configuration information contained in a scheduling instruction, so that the terminal device and the network device have a consistent understanding of the transmission of HRQA information, thereby ensuring the reliability of data transmission.

In the above embodiments provided by the present disclosure, the methods provided by the embodiments of the present disclosure are introduced from the perspectives of network devices and terminal devices, respectively. In order to implement the functions in the methods provided by the above embodiments of the present disclosure, the network devices and terminal devices may include hardware structures and software modules, and the above functions may be implemented in the form of hardware structures, software modules, or hardware structures plus software modules. One of the above functions may be executed in the form of hardware structures, software modules, or hardware structures plus software modules.

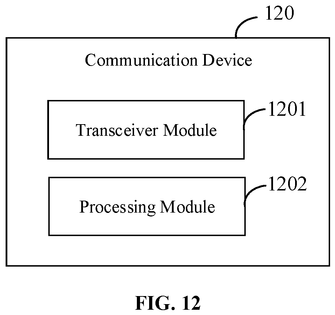

Please refer to FIG. 12, which is a schematic diagram of the structure of a communication device 1200 provided in an embodiment of the present disclosure. The communication device 1200 shown in FIG. 12 may include a processing module 1201 and a transceiver module 1202.

The transceiver module 1202 may include a sending module and/or a receiving module. The sending module is used to implement a sending function, and the receiving module is used to implement a receiving function. The transceiver module 1202 may implement a sending function and/or a receiving function.

It can be understood that the communication device 1200 can be a terminal device, or an apparatus in a terminal device, or an apparatus that can be used in conjunction with a terminal device.

The communication device 1200, on the terminal device side, includes:
a transceiver module 1202, configured to receive a scheduling instruction for scheduling data transmission on multiple cells; and
a processing module 1201, configured to obtain time domain configuration information from the scheduling instruction;
wherein the processing module 1201 is further configured to determine the time domain information of the HARQ feedback of each cell among the multiple scheduled cells according to the time domain configuration information.

Optionally, the scheduling instruction is downlink control information (DCI), and the time domain configuration information is a physical downlink shared channel (PDSCH)-to-HARQ timing indicator information field in the DCI.

Optionally, the time domain configuration information includes first indication information, where the first indication information is used to indicate time domain information of HARQ feedback of the scheduled cell.

Optionally, the time domain configuration information includes second indication information, and the processing module 1201 is specifically configured to:
obtain a time domain configuration table; and
look up in the time domain configuration table according to the second indication information to determine the time domain information of the HARQ feedback of each cell among the multiple scheduled cells.

Optionally, the time domain configuration information includes third indication information, and the processing module 1201 is specifically configured to:
determine a reference PDSCH from PDSCHs of multiple scheduled cells, wherein the cell corresponding to the reference PDSCH is the reference cell;
acquire a reference uplink time domain unit corresponding to the reference PDSCH, wherein the third indication information is used to indicate a time offset between time domain information of HARQ feedback corresponding to other cells in the multiple scheduled cells except the reference cell and time domain information of the reference uplink time domain unit; and
determine the time domain information of the HARQ feedback of other cells according to the reference uplink time domain unit and the third indication information.

Optionally, the reference PDSCH is the last PDSCH whose transmission is completed in the time domain, and the reference uplink time domain unit is the last uplink time domain unit corresponding to the downlink time domain unit where the reference PDSCH is located.

Optionally, the other cells and the cell corresponding to the reference PDSCH belong to the same physical uplink control channel (PUCCH) cell group.

In the communication device provided by the present disclosure, the terminal device first receives a scheduling instruction for scheduling data transmission on multiple cells, then obtains time domain configuration information from the scheduling instruction, and determines the time domain information of HARQ feedback of each of the multiple scheduled cells according to the time domain configuration information. Thus, the terminal device can determine the time domain information of HARQ feedback of each of the multiple scheduled cells according to the time domain configuration information contained in the scheduling instruction sent by the network device, so that the terminal device and the network device can have a consistent understanding of the transmission of HRQA information, thereby ensuring the reliability of information transmission.

It can be understood that the communication device 120 can be a network device, an apparatus in a network device, or an apparatus that can be used in conjunction with a network device.

The communication device 120, on the network device side, includes:
a transceiver module 1202, configured to send a scheduling instruction for scheduling data transmission on multiple cells, wherein the scheduling instruction includes time domain configuration information for determining time domain information of HARQ feedback of each cell among the multiple scheduled cells.

Optionally, the scheduling instruction is downlink control information (DCI), and the time domain configuration information is a physical downlink shared channel (PDSCH) to HARQ_timing instruction information field in the DCI.

Optionally, the time domain configuration information includes multiple pieces of first indication information, and the first indication information is used to indicate the time domain information of the HARQ feedback of the scheduled cell.

Optionally, the time domain configuration information includes second indication information, and the second indication information is used to indicate a unified identifier of multiple scheduled cells.

Optionally, the time domain configuration information includes third indication information, and the third indication information is used to indicate the time offset between the time domain information of HARQ feedback corresponding to other cells among multiple scheduled cells except a reference cell and the time domain information of the reference uplink time domain unit corresponding to a reference PDSCH, wherein the reference PDSCH is the PDSCH corresponding to the reference cell.

Optionally, the reference PDSCH is the last PDSCH whose transmission is completed in the time domain, and the reference uplink time domain unit is the last uplink time domain unit corresponding to the downlink time domain unit where the reference PDSCH is located.

The communication device provided by the present disclosure, the network device sends a scheduling instruction for scheduling data transmission on multiple cells to the terminal device, wherein the scheduling instruction includes time domain configuration information for determining the time domain information of HARQ feedback of each cell among the multiple scheduled cells, thereby enabling the terminal device to determine the time domain information of HARQ feedback of each cell among the multiple scheduled cells according to the time domain configuration information, so that the terminal device and the network device can have a consistent understanding of the transmission of HRQA information, thereby ensuring the reliability of information transmission.

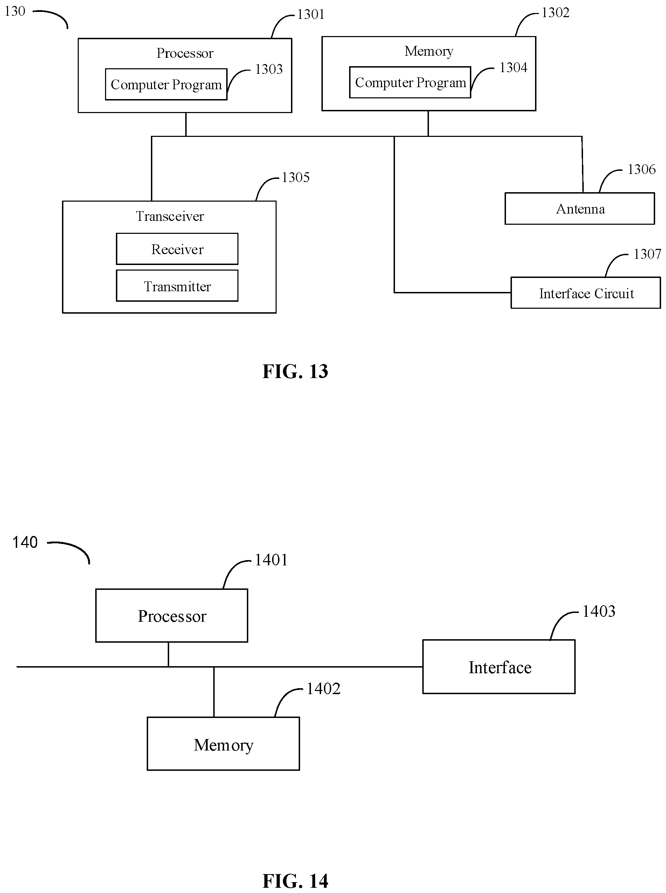

Please refer to FIG. 13, which is a schematic structural diagram of another communication device 130 provided by an embodiment of the present disclosure. The communication device 130 may be a network device, or may be a terminal device, or may be a chip, a chip system, a processor or the like that supports the network device to implement the above method, or may be a chip, a chip system, a processor or the like that supports the terminal device to implement the above method. The device can be used to implement the method described in the above method embodiments. For details, reference may be made to the description in the above method embodiments.

The communication device 130 may include one or more processors 1301. The processor 1301 may be a general-purpose processor or a dedicated processor, or the like. For example, the processor 1301 may be a baseband processor or a central processing unit. The baseband processor can be used to process communication protocols and communication data. The central processor can be used to control the communication devices (such as base stations, baseband chips, terminal devices, terminal device chips, DU or CU, or the like), execute computer programs, and process data for the computer programs.

Optionally, the communication device 130 may also include one or more memories 1302, on which a computer program 1304 may be stored. The processor 1301 executes the computer program 1304, so that the communication device 130 performs the method described in the above method embodiments. Optionally, the memory 1302 may also store data. The communication device 130 and the memory 1302 can be provided separately or integrated together.

Optionally, the communication device 130 may also include a transceiver 1305 and an antenna 1306. The transceiver 1305 may be referred to as a transceiver unit, a transceiver, a transceiver circuit, or the like, and is used to implement transceiver functions. The transceiver 1305 may include a receiver and a transmitter. The receiver may be referred to as a receiver or a receiving circuit, or the like, and is used to implement the receiving function; and the transmitter may be referred to as a transmitter, a transmitting circuit, or the like, and is used to implement the transmitting function.

Optionally, the communication device 130 may also include one or more interface circuits 1307. The interface circuit 1307 is used to receive code instructions and transmit the code instructions to the processor 1301. The processor 1301 executes the code instructions to cause the communication device 130 to perform the method described in the above method embodiments.

The communication device 130 is terminal device: the processor 1301 is used to perform step 22, step 23 in FIG. 2, step 32, step 33 in FIG. 3, step 42, step 43, step 44 in FIG. 4, etc. The transceiver 1305 is used to perform step 21 in FIG. 2; step 31 in FIG. 3; step 41 in FIG. 4, etc.

The communication device 130 is a network device: the transceiver 1305 is used to perform step 81 in FIG. 8; or step 91 in FIG. 9, etc.

In one implementation, the processor 1301 may include a transceiver for implementing receiving and transmitting functions. For example, the transceiver may be a transceiver circuit, an interface, or an interface circuit. The transceiver circuits, interfaces or interface circuits used to implement the receiving and transmitting functions can be separate or integrated together. The above-mentioned transceiver circuit, interface or interface circuit can be used for reading and writing codes/data, or the above-mentioned transceiver circuit, interface or interface circuit can be used for signal transmission or transfer.

In one implementation, the processor 1301 may be stored with a computer program 1303, and the computer program 1303 is executed by the processor 1301, causing the communication device 130 to perform the method described in the above method embodiments. The computer program 1303 may be solidified in the processor 1301, in which case the processor 1301 may be implemented by hardware.

In one implementation, the communication device 130 may include a circuit, and the circuit may implement the functions of sending or receiving or communicating in the foregoing method embodiments. The processors and transceivers described in this disclosure may be implemented on an integrated circuit (IC), an analog IC, a radio frequency integrated circuit (RFIC), a mixed signal IC, an application specific integrated circuit (ASIC), a printed circuit boards (PCB), an electronic device, and the like. The processor and transceiver can also be manufactured using various IC process technologies, such as complementary metal oxide semiconductor (CMOS), N-type metal oxide semiconductor (nMetal-oxide- semiconductor, NMOS), P-type metal oxide semiconductor (positive channel metal oxide semiconductor, PMOS), bipolar junction transistor (BJT), bipolar CMOS (BiCMOS), silicon germanium (SiGe), gallium arsenide (GaAs), and the like.

The communication device described in the above embodiments may be a network device or aterminal device, but the scope of the communication device described in this disclosure is not limited thereto, and the structure of the communication device may not be limited by FIG. 13. The communication device may be a stand-alone device or may be part of a larger device. For example, the communication device may be:
(1) a stand-alone integrated circuit IC, or chip, or chip system or subsystem;
(2) a set of one or more ICs. Optionally, the IC set may also include storage components for storing data and computer programs;
(3) an ASIC, such as a modem;
(4) a module that can be embedded in another device;
(5) a receiver, a terminal device, an intelligent terminal device, a cellular phone, a wireless device, a handheld device, a mobile unit, a vehicle-mounted device, a network device, a cloud device, an artificial intelligence device, and the like;
(6) others, etc.

For the case where the communication device may be a chip or a chip system, reference may be made to the schematic structural diagram of the chip shown in FIG. 14. The chip shown in FIG. 14 includes a processor 1401 and an interface 1402. The processor 1401 may include one or more processors, and the interface 1402 may include multiple interfaces.

For the case where the chip is used to implement the functions of the terminal device in the embodiment of the present disclosure:

The processor 1401 is used to perform step 22, step 23 in FIG. 2, step 32, step 33 in FIG. 3, step 42, step 43, step 44 in FIG. 4, etc.

The interface 1402 is configured to execute the step 21 in FIG. 2; step 31 in FIG. 3; step 41 in FIG. 4, etc.

For the case where the chip is used to implement the functions of the network device in the embodiment of the present disclosure:

The processor 1401 is configured to execute the step 81 in FIG. 8; or step 91 in FIG. 9, etc.

The interface 1402 is configured to execute the step 81 in FIG. 8; or step 91 in FIG. 9, etc. Optionally, the chip also includes a memory 1403, which is used to store necessary computer programs and data.

Those skilled in the art can also understand that the various illustrative logical blocks and steps listed in the embodiments of the present disclosure can be implemented by electronic hardware, computer software, or a combination of both. Whether such functionality is implemented in hardware or software depends on the specific application and overall system design requirements. Those skilled in the art can use various methods to implement the described functions for each specific application, but such implementation should not be understood as exceeding the scope of protection of the embodiments of the present disclosure.

Embodiments of the present disclosure also provide a communication system. The system includes a communication device as a terminal device and a communication device as a network device in the embodiment of FIG. 13, or the system includes a communication device as a terminal device and a communication device as a network device in the embodiment of FIG. 14.

The present disclosure also provides a computer-readable storage medium on which instructions are stored. When the instructions are executed by a computer, the functions of any of the above method embodiments are implemented.

The present disclosure also provides a computer program product, which, when been executed by a computer, implements the functions of any of the above method embodiments.

In the above embodiments, it may be implemented in whole or in part by software, hardware, firmware, or any combination thereof. When implemented by software, it may be implemented in whole or in part in the form of a computer program product. The computer program product includes one or more computer programs. When the computer program is loaded and executed on a computer, the processes or functions described in accordance with the embodiments of the present disclosure are generated in whole or in part. The computer may be a general-purpose computer, a dedicated computer, a computer network, or other programmable device. The computer program may be stored in a computer-readable storage medium, or been transferred from one computer-readable storage medium to another, for example, the computer program may be transferred from a website, computer, server, or data center to another website, computer, server or data center via wired (such as coaxial cable, optical fiber, digital subscriber line (DSL)) or wireless (such as infrared, wireless, microwave, or the like) means. The computer-readable storage medium may be any available medium that can be accessed by a computer, or a data storage device such as an integrated server, data center, or the like, that includes one or more available media. The available media may be magnetic media (e.g., floppy disks, hard disks, magnetic tapes), optical media (e.g., high-density digital video discs (DVD)), or semiconductor media (e.g., solid state disks, SSD)) or the like.

Those of ordinary skill in the art can understand that the first, second, and other numerical numbers involved in this disclosure are only distinctions made for convenience of description and are not used to limit the scope of the embodiments of the disclosure, nor to indicate the order.

At least one in the present disclosure can also be described as one or more, and the plurality can be two, three, four or more, which is not limited in the present disclosure. In the embodiment of the present disclosure, for one type of technical feature, "first", "second", "third", "A", "B", "C" and "D", or the like are used to distinguish the technical features in the type of technical feature, and the technical features described with "first", "second", "third", "A", "B", "C" and "D" are in no order of precedence or order of size.

It should be understood that, although the terms first, second, third, etc. may be used to describe various information in the embodiments of the present application, these information should not be limited to these terms. These terms are only used to distinguish the same type of information from each other. For example, without departing from the scope of the embodiments of the present application, the first information may also be referred to as the second information, and similarly, the second information may also be referred to as the first information. The words "if" and "if" as used herein may be interpreted as "at the time of" or "when" or "in response to determination" or "under the circumstances of ".

The corresponding relationships shown in each table in this disclosure can be configured or predefined. The values of the information in each table are only examples and can be configured as other values, which is not limited by this disclosure. When configuring the correspondence between information and each parameter, it is not necessarily required to configure all the correspondences shown in each table. For example, in the table in this disclosure, the corresponding relationships shown in some rows may not be configured. For another example, appropriate deformation adjustments can be made based on the above table, such as splitting, merging, or the like. The names of the parameters shown in the titles of the above tables may also be other names understandable by the communication device, and the values or expressions of the parameters may also be other values or expressions understandable by the communication device. When implementing the above tables, other data structures can also be used, such as arrays, queues, containers, stacks, linear lists, pointers, linked lists, trees, graphs, structures, classes, heaps, hash tables, or the like.

Predefinition in this disclosure may be understood as definition, pre-definition, storage, pre-storage, pre-negotiation, pre-configuration, firming, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are implemented in hardware or software depends on the specific application and design restrictions of the technical solution. Those skilled in the art may implement the described functions using different methods for each specific application, but such implementations should not be considered to be beyond the scope of this disclosure.

It is further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other embodiments of the present disclosure after considering the specification and practicing the invention disclosed herein. This application is intended to cover any variations, uses, or adaptations of the present disclosure that follow the general principles of the present disclosure and include common knowledge or customary techniques in the art that are not disclosed in the present disclosure. The specification and examples are intended to be exemplary only, and the true scope and spirit of the present disclosure are indicated by the following claims.

Those skilled in the art can clearly understand that for the convenience and simplicity of description, the specific operating processes of the systems, devices and units described above can be referred to the corresponding processes in the foregoing method embodiments, which will not be described again here.

The above are only specific embodiments of the present disclosure, but the protection scope of the present disclosure is not limited thereto. Any changes or substitutions easily conceivable to those skilled in the art within the technical scope disclosed in the present disclosure should be covered by the protection scope of this disclosure. Therefore, the protection scope of the present disclosure should be subject to the protection scope of the claims.

## Claims

1. A method for determining hybrid automatic repeat request (HARQ) feedback, performed by a terminal device, and comprising:
receiving a scheduling instruction for scheduling data transmission on multiple cells;
acquiring time domain configuration information from the scheduling instruction; and
determining time domain information of the HARQ feedback of each cell among the scheduled multiple cells according to the time domain configuration information.

2. The method according to claim 1, wherein the scheduling instruction is downlink control information (DCI), and the time domain configuration information is a physical downlink shared channel (PDSCH)-to-HARQ timing indicator information field in the DCI.

3. The method according to claim 1, wherein the time domain configuration information comprises first indication information, and the first indication information is configured to indicate the time domain information of the HARQ feedback of a scheduled cell.

4. The method according to claim 1, wherein the time domain configuration information comprises second indication information, and the determining the time domain information of the HARQ feedback of each cell among the scheduled multiple cells according to the time domain configuration information comprises:
acquiring a time domain configuration table; and
determining the time domain information of the HARQ feedback of each cell among the scheduled multiple cells by looking up in the time domain configuration table according to the second indication information.

5. The method according to claim 1, wherein the time domain configuration information comprises third indication information, and the method further comprises:
determining a reference PDSCH from the PDSCHs of the scheduled multiple cells, wherein a cell corresponding to the reference PDSCH is a reference cell;
acquiring a reference uplink time domain unit corresponding to the reference PDSCH, wherein the third indication information is configured to indicate a time offset between the time domain information of the HARQ feedback corresponding to other cell among the scheduled multiple cells except the reference cell and the time domain information of the reference uplink time domain unit; and
determining the time domain information of the HARQ feedback corresponding to the other cell according to the reference uplink time domain unit and the third indication information.

6. The method according to claim 5, wherein the reference PDSCH is a last PDSCH transmission completed in the time domain, and the reference uplink time domain unit is a last uplink time domain unit corresponding to a downlink time domain unit where the reference PDSCH is located.

7. The method according to claim 5, wherein the other cell and the cell corresponding to the reference PDSCH belong to a same physical uplink control channel (PUCCH) cell group.

8. A method for determining hybrid automatic repeat request (HARQ) feedback, performed by a network device, and comprising:
sending a scheduling instruction for scheduling data transmission on multiple cells, wherein the scheduling instruction comprises time domain configuration information for determining time domain information of the HARQ feedback of each cell among the scheduled multiple cells.

9. The method according to claim 8, wherein the scheduling instruction is downlink control information (DCI), and the time domain configuration information is a physical downlink shared channel (PDSCH)-to-HARQ timing indicator information field in the DCI.

10. The method according to claim 8, wherein the time domain configuration information comprises first indication information, and the first indication information is configured to indicate the time domain information of the HARQ feedback of a scheduled cell.

11. The method according to claim 8, wherein the time domain configuration information comprises second indication information, and the second indication information is configured to indicate a unified identification of the scheduled multiple cells.

12. The method according to claim 8, wherein the time domain configuration information comprises third indication information, and the third indication information is configured to indicate a time offset between the time domain information of the HARQ feedback corresponding to other cell among the scheduled multiple cells except a reference cell and the time domain information of a reference uplink time domain unit, wherein a reference PDSCH is a PDSCH corresponding to the reference cell.

13. The method according to claim 12, wherein the reference PDSCH is a last PDSCH transmission completed in the time domain, and the reference uplink time domain unit is a last uplink time domain unit corresponding to a downlink time domain unit where the reference PDSCH is located.

14. A terminal device, comprising:
a transceiver module, configured to receive a scheduling instruction for scheduling data transmission on multiple cells; and
a processing module, configured to acquire time domain configuration information from the scheduling instruction;
wherein the processing module is further configured to determine time domain information of the HARQ feedback of each cell among the scheduled multiple cells according to the time domain configuration information.

15. A network device comprising:
a transceiver module, configured to send a scheduling instruction for scheduling data transmission on multiple cells, wherein the scheduling instruction includes time domain configuration information for determining time domain information of the HARQ feedback of each cell among the scheduled multiple cells.

16. A communication device, comprising a processor and a memory, wherein a computer program is stored in the memory, and the computer program stored in the memory is executed by the processor to cause the device to perform the method according to any one of claims 1 to 7.

17. A communication device, comprising a processor and a memory, wherein a computer program is stored in the memory, and the computer program stored in the memory is executed by the processor to cause the device to perform the method according to any one of claims 8 to 14.

18. A communication device, comprising: a processor and an interface circuit;
the interface circuit is configured to receive code instructions and transmit the code instructions to the processor; and
the processor is configured to execute the code instructions to perform the method according to any one of claims 1 to 7.

19. A communication device, comprising: a processor and an interface circuit;
the interface circuit is configured to receive code instructions and transmit the code instructions to the processor; and
the processor is configured to execute the code instructions to perform the method according to any one of claims 8 to 14.

20. A computer-readable storage medium storing instructions that, when executed, implement the method according to any one of claims 1 to 7.

21. A computer-readable storage medium storing instructions that, when executed, implement the method according to any one of claims 8 to 14.
